# EUROPÄISCHE PATENTSCHRIFT

(11) **EP 0 785 041 B1**
(45) Veröffentlichungstag und Bekanntmachung des Hinweises auf die Patenterteilung: **28.02.2001**
(21) Anmeldenummer: 96120313.0
(22) Anmeldetag: 18.12.1996
(51) Int. Cl.: B23B 31/00, B23Q 3/12

(54) **Bohrfutter**
Drill chuck
Mandrin porte-foret

(30) Priorität: 17.01.1996 DE 19601441
(43) Veröffentlichungstag der Anmeldung: 23.07.1997
(73) Patentinhaber: Röhm GmbH, 89567 Sontheim (DE)
(72) Erfinder: Röhm, Günter Horst, 89567 Sontheim (DE)
(74) Vertreter: Dziewior, Joachim, Dipl.-Phys. Dr.

(56) Entgegenhaltungen:
- EP-A- 0 495 416
- EP-A- 0 561 247

## Beschreibung

Die Erfindung betrifft ein Bohrfutter mit einem an eine Bohrspindel anschließbaren Futterkörper, mit zwischen sich eine Aufnahme für das Bohrwerkzeug bildenden Spannbacken, die mit einer Verzahnung in ein Spanngewinde eines metallenen Spannrings eingreifen, an dem ein metallener Zwischenring drehfest angeschlossen ist, der eine Führung für eine der Verstellung der Spannbacken dienende Spannhülse bildet (siehe z.B. EP-A-495 416).

Derartige Bohrfutter sind aus der Praxis in verschiedenen Ausführungsformen bekannt. Insbesondere sind schlüssellos spannbare Bohrfutter bekannt, die entweder selbstspannend ausgebildet oder allein von Hand spannbar sind, was aber immer ein Verdrehen der Spannhülse relativ zum Futterkörper voraussetzt, um die Spannbacken verstellen und dadurch das Bohrfutter spannen oder lösen, bzw. schließen oder öffnen zu können. Dabei besteht die Spannhülse aus Gründen des Gewichts und/oder aus fertigungstechnischen Gründen häufig aus einem Kunststoff, was mit dem Nachteil verbunden ist, daß die äußere Umfangsfläche der Spannhülse durch die geringe Oberflächenhärte des Kunststoffs leicht Beschädigungen ausgesetzt ist, wenn etwa beim Bohren das laufende Bohrfutter mit der Spannhülse in Kontakt mit dem Werkstück gelangt oder wenn ein Bohrfutter, das sich im Bohrbetrieb besonders stark festgezogen und verklemmt hat, gelöst werden muß, was meistens nur dadurch möglich ist, daß an der Spannhülse eine Zange angesetzt und die Spannhülse mit Hilfe der Zange zum Öffnen des Bohrfutters gedreht wird. Die Zange hinterläßt dabei regelmäßig ihre Eindrücke an der Spannhülse, wenn letztere aus Kunststoff besteht. Bei aus Kunststoff gefertigten Spannhülsen können zudem zur Verstellung der Spannbacken nur relativ geringe Kräfte von der Spannhülse über den Zwischenring und den Spannring übertragen werden, bevor der metallene Zwischenring die im Vergleich weiche Spannhülse irreversible deformiert, wodurch in der Regel das gesamte Bohrfutter unbrauchbar wird.

Der Erfindung liegt die Aufgabe zugrunde, ein Bohrfutter der eingangs genannten Art so auszubilden, daß durch die Spannhülse große Kräfte ausgeübt werden und auf die Oberfläche der Spannhülse große Kräfte einwirken können, auch wenn die Spannhülse im übrigen aus einem vergleichsweise empfindlichen Werkstoff besteht.

Diese Aufgabe wird bei einem Bohrfutter mit den eingangs genannten Merkmalen nach der Erfindung dadurch gelöst, daß die Spannhülse zweiteilig mit einem äußeren Mantel und mit einem drehfest mit diesem verbundenen inneren Mantel gebildet ist, und daß der äußere Mantel aus einem harten Werkstoff besteht und zur Verstellung des Zwischenrings vorgesehen ist.

Der harte äußere Mantel der Spannhülse ist gegen Beschädigungen seiner Außenfläche weitgehend unempfindlich und widerstandsfähig, so daß Beschädigungen im Bohrbetrieb oder durch Ansetzen einer Zange zum Drehen der Spannhülse weitgehend vermieden werden. Auch bei der Kraftübertragung von der beispielsweise gewaltsam mit einer Zange gedrehten Spannhülse auf den Zwischenring über den Spannring auf die Spannbacken ist die Spannhülse besser vor Beschädigungen durch den harten Zwischenring geschützt, der nurmehr auf den gleichfalls harten äußeren Mantel der Spannhülse und nicht auf den inneren Mantel einwirkt.

Vorteilhafterweise besteht der äußere Mantel aus Metall, insbesondere Stahl, so daß für Spannring, Zwischenring und dem daran angreifenden Teil der Spannhülse gleiche Werkstoffe mit aufeinander angepaßter Härte zur Verfügung stehen, die eine Kraftübertragungskette bilden, bei der kein Glied gegenüber dem anderen geschwächt ist.

Es empfiehlt sich, die Spannhülse so auszubilden, daß der innere Mantel aus einem fertigungstechnisch leicht formbaren Werkstoff besteht und zur Verstellung einer die Verdrehung des Spannrings verhindernden bzw. freigebenden Sperreinrichtung vorgesehen ist. Die Sperreinrichtung verhindert unerwünschte Verdrehungen des Spannrings relativ zum Futterkörper und wird durch die Spannhülse betätigt, die deshalb auf der Innenseite eine relativ komplizierte Gestaltung aufweist, wozu der innere Mantel aus einem Werkstoff gebildet ist, der entsprechend leicht zu formen ist, wie beispielsweise Kunststoff. Dann bereitet es keine Schwierigkeiten, kostengünstig zur Verstellung der Sperreinrichtung am inneren Mantel eine Steuerkurve anzuordnen.

Der Schutz des gesamten Bohrfutters durch den harten äußeren Mantel der Spannhülse ist dann erreicht, wenn sich der äußere Mantel in axialer Richtung bis zu dem dem Bohrwerkzeug abgewandten Ende des Futterkörpers erstreckt.

Zweckmäßigerweise übergreift der äußere Mantel an dem dem Bohrwerkzeug zugewandten Ende den inneren Mantel, um so in einfacher Weise an dem Zwischenring angreifen zu können.

Dabei ist es hinsichtlich einer guten Kraftübertragung vorteilhaft, wenn der Zwischenring Anschlagstücke trägt, die in Aussparungen des äußeren Mantels eingreifen.

Handelt es sich dabei um eine Spannhülse mit einer konischen Hülsenverjüngung am vorderen, dem Bohrwerkzeug zugewandten Hülsenende, ist vorzugsweise auch diese konische Hülsenverjüngung vom äußeren Mantel umschlossen.

Bei einem Bohrfutter mit axial vor der Spannhülse angeordneten, frei verdrehbaren Anschlaghülse, die am Futterkörper axial unverschiebbar und drehbar gelagert ist, empfiehlt die Erfindung weiter, daß sich der Mantel bis zum rückwärtigen Rand dieser Anschlaghülse erstreckt.

Alternativ ist es gleichfalls möglich, daß der äußere Mantel sich axial bis zu dem dem Bohrwerkzeug zugewandten Ende des Futterkörpers erstreckt und dessen Stirnseite bedeckt, wodurch die Schutzfunktion des äußeren Mantels auch den axial vorderen Bereich des Futterkörpers mit umfaßt.

Eine alternative Ausführungsform der Erfindung ist dadurch gekennzeichnet, daß der äußere Mantel das axial dem Bohrwerkzeug zugewandte Ende des inneren Mantels mit einem Ringbund umgreift, und daß in dem Ringbund des äußeren Mantels die Aussparungen angeordnet sind. Der äußere Mantel dient auch in diesem Fall zugleich als Anschlagschutz, der das Bohrfutter vor Beschädigungen schützt, wenn es im Bohrbetrieb gegen das Werkstück oder die Wand stößt.

Nach einer Weiterbildung der Erfindung ist vorgesehen, daß der äußere Mantel im Bereich der Aussparungen eine Auskragung aufweist, mit der er am Futterkörper abgestützt ist.

Dabei ist es möglich, daß die Auskragung durch einen am Futterkörper gehaltenen Sprengring gegen axiale Verschiebung gesichert ist, also die Spannhülse insgesamt in axialer Richtung festgelegt ist.

Zweckmäßigerweise ist die äußere Umfangsfläche des äußeren Mantels über wenigstens einen Teil ihrer axialen Höhe als Grifffläche zum Verdrehen der Spannhülse von Hand ausgebildet.

Im folgenden wird die Erfindung an in der Zeichnung dargestellten Ausführungsbeispielen näher erläutert; es zeigen:
- Fig. 1: ein Bohrfutter nach der Erfindung, links in einem Axialschnitt, rechts in einer Seitenansicht,
- Fig. 2: den Schnitt II-II aus Fig. 1 mit der Sperreinrichtung in der ausgerasteten Stellung,
- Fig. 3: eine der Fig. 2 entsprechende Darstellung mit der Sperreinrichtung in der eingerasteten Stellung,
- Fig. 4: den Schnitt IV-IV aus Fig. 1 mit den in die Aussparungen des äußeren Mantels ragenden Anschlagstücken des Zwischenrings,
- Fig. 5: eine der Fig. 1 entsprechende Darstellung eines alternativen Bohrfutters mit dem den inneren Mantel umgreifenden Ringbund des äußeren Mantels,
- Fig. 6: eine der Fig. 1 entsprechende Darstellung einer weiteren Ausführungsform der Erfindung, und
- Fig. 7: eine der Fig. 1 entsprechende Darstellung einer nochmals anderen Ausführungsform der Erfindung.

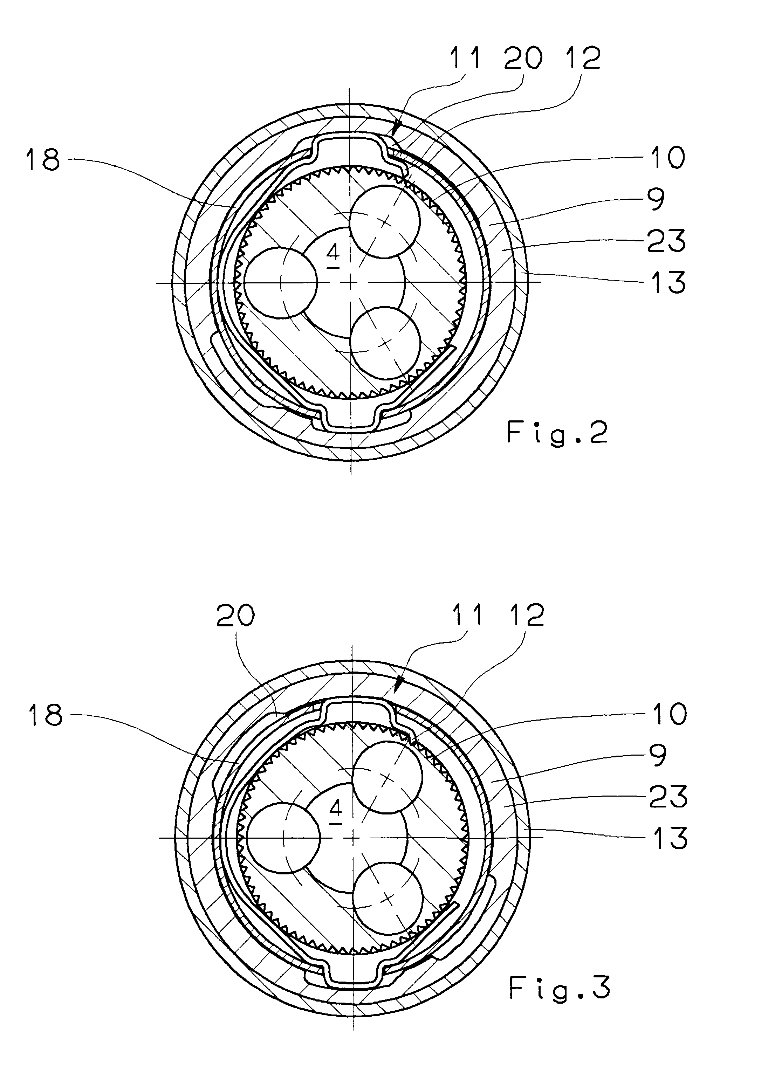

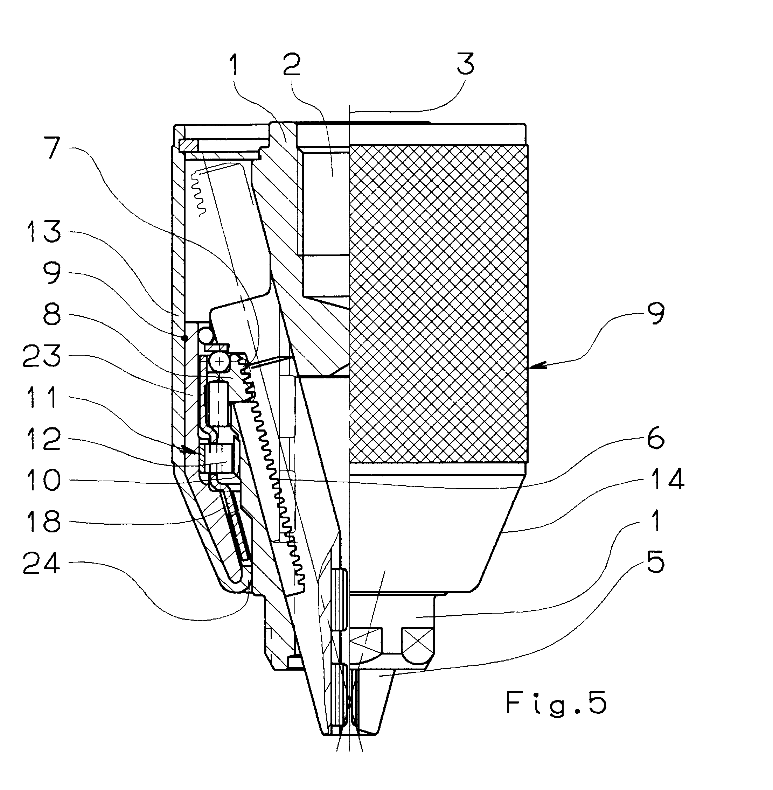

Das in der Zeichnung dargestellte Bohrfutter dient zur Aufnahme eines nicht dargestellten Bohrers und besitzt einen Futterkörper 1 zum Anschluß an eine ebenfalls nicht dargestellte Bohrspindel. Zum Anschluß der Bohrspindel besitzt der Futterkörper 1 eine Gewindeaufnahme 2, an die sich nach vorne ein axialer Durchgang 2' anschließen kann, durch den hindurch die Schläge eines in der hohlen Drehspindel verschiebbar geführten Schlägers oder Döppers unmittelbar auf das Schaftende des in der Werkzeugaufnahme 4 des Bohrfutters gehaltenen Bohrers übertragen werden können. Das Bohrfutter besitzt drei den Bohrer zentrierende, axial führende und/oder einspannende Spannbacken 5, die in der zur Futterachse 3 koaxialen Werkzeugaufnahme 4 zentrisch zur Futterachse 3 verstellbar sind. Die Spannbacken 5 greifen mit einer Verzahnung 6 in ein Spanngewinde 7 eines Spannrings 8, der am Futterkörper 1 axial unverschiebbar und drehbar geführt ist und zum Spannen und Lösen des Bohrfutters mit Hilfe einer ebenfalls axial unverschiebbaren Spannhülse 9 von Hand relativ zum Futterkörper 1 verdreht werden kann. Die Spannhülse 9 ist zweiteilig mit einem äußeren Mantel 13 und einem inneren Mantel 23 gebildet, die drehfest miteinander verbunden sind. Um unerwünschte Verstellungen der Spannbacken 5 zu verhindern, kann die Drehstellung des Spannrings 8 fixiert werden. Dazu dient eine allgemein mit 11 bezeichnete und zwischen dem Spannring 8 und dem Futterkörper 1 ausgebildete Sperreinrichtung, die aus einem koaxialen Kranz von Sperrausnehmungen 10 an der äußeren Umfangsfläche des Futterkörpers 1 und aus mindestens einem Sperrglied 12 besteht, das unter Federkraft im wesentlichen radial von außen nach innen in die Sperrausnehmungen 10 greift. Das Sperrglied 12 kann zwischen seinen an den Sperrausnehmungen 10 eingerückten Zuständen (Fig. 3) und ausgerückten Zuständen (Fig. 2) verstellt werden, wozu das Sperrglied 12 durch eine an dem inneren Mantel der Spannhülse ausgebildete Steuerkurve 20 verstellbar und entsprechend die Spannhülse 9 relativ zum Spannring 8 verdrehbar ist. Diese Verdrehung der Spannhülse 9 relativ zum Spannring 8 ist in beiden Drehrichtungen formschlüssig begrenzt. Der Spannring 8 besitzt einen eine Führung für die Spannhülse 9 bildenden koaxialen Zwischenring 18, der zur Drehbegrenzung zwischen der Spannhülse 9 und dem Zwischenring 18 Anschlagstücke 29 trägt, die in Aussparungen 30 an dem äußeren Mantel 13 der Spannhülse 9 eingreifen, wobei das Anschlagstück 29 an den Enden des Drehwegs jeweils mit einer der die Aussparung 30 in Umfangsrichtung begrenzenden Stirnflächen 17,28 zum Anschlag kommt. Im Ergebnis zeigt die Spannhülse 9 an ihrer Innenseite eine vergleichsweise komplizierte Gestaltung, die aus fertigungstechnischen Gründen zur Folge hat, daß der innere Mantel 23 der Spannhülse 9 aus Kunststoff besteht. Um der Spannhülse 9 dennoch an der äußeren Umfangsfläche eine für die Handhabung des Bohrfutters und im Bohrbetrieb ausreichende Verschleißfestigkeit zu geben, weist die Spannhülse 9 an ihrer äußeren Umfangsfläche den äußeren Mantel 13 auf, der aus einem harten Werkstoff, im allgemeinen aus Stahl besteht. Bei Verdrehen der Spannhülse 9 erfolgt die Kraftübertragung von dem äußeren Mantel 13 über den metallenen Zwischenring 18 zu dem gleichfalls aus Metall bestehenden Spannring 8, so daß insgesamt große Kräfte zum Spannen bzw. Lösen des Bohrfutters übertragen werden können, was von besonderer Bedeutung ist, falls sich das Bohrfutter im Bohrbetrieb besonders stark festgezogen oder verklemmt hat.

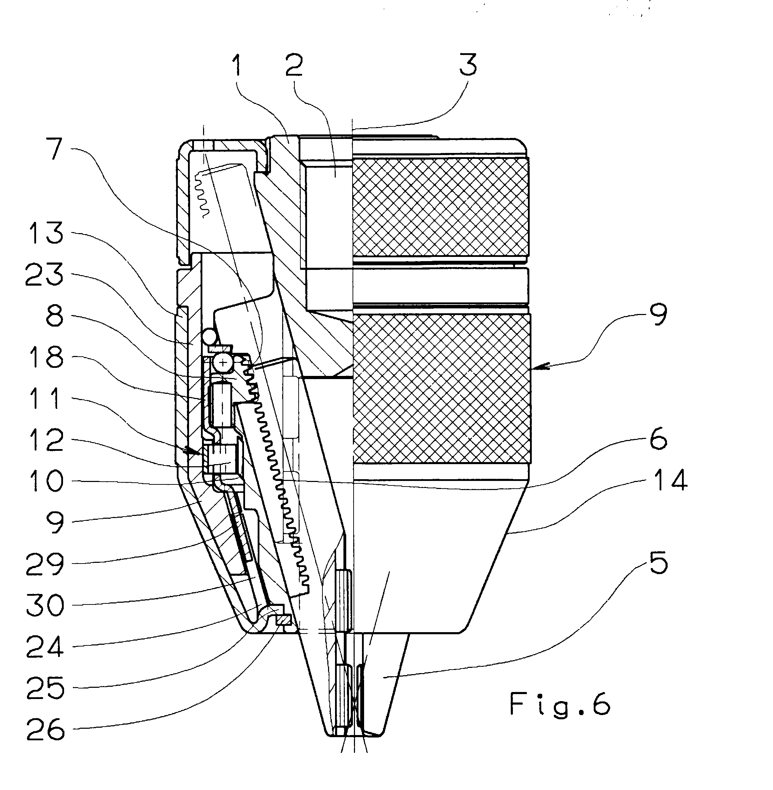

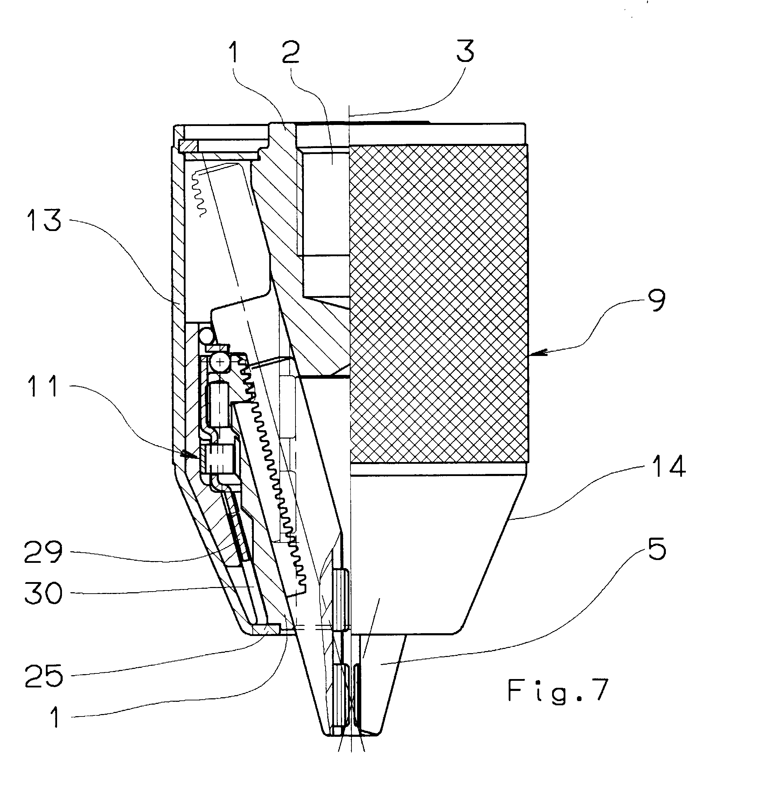

Bei den aus den Fig. 5 und 7 ersichtlichen Ausführungsformen erstreckt sich der äußere Mantel 13 in axialer Richtung über den größten Teil des Bohrfutters und reicht an dem dem Bohrwerkzeug abgewandten Ende bis zum Ende des Futterkörpers 1 und schließt somit auch den die Spannbacken 5 in deren zurückgezogenen Stellung aufnehmenden Raum ab. Es ist weiterhin bei diesen Ausführungsformen ersichtlich, daß der äußere Mantel 13 das axial dem Bohrwerkzeug zugewandte Ende des inneren Mantels Mantels 23 mit einem Ringbund 24 umgreift, in dem die Aussparungen 30 für die Anschlagstücke 29 angeordnet sind. Der Ringbund 24 kann im Bereich der Aussparungen 30, wie dies Fig. 6 zeigt, Auskragungen 25 aufweisen, mit denen er am Futterkörper 1 abgestützt ist. Ein Sprengring 16 sichert den äußeren Mantel vor axialen Verschiebungen.

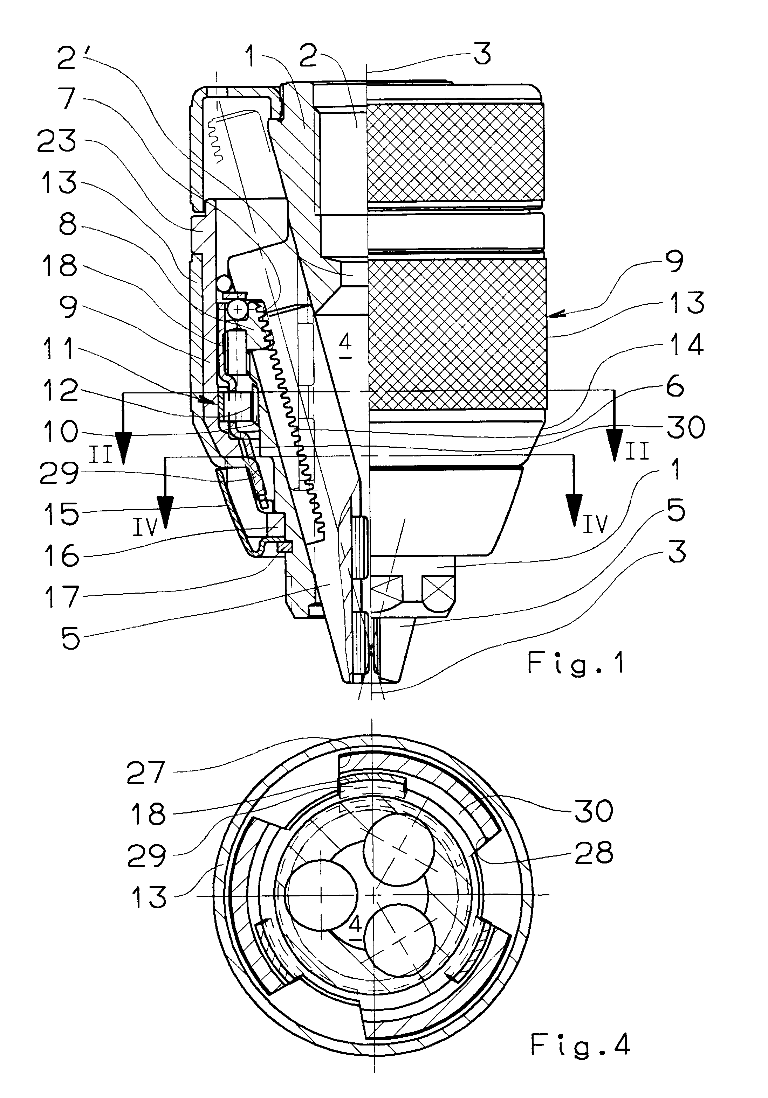

Die Spannhülse 9 ist am vorderen, dem Bohrwerkzeug zugewandten Hülsenende mit einer konischen Hülsenverjüngung 14 versehen. Der äußere Mantel 13 umschließt auch diese konische Hülsenverjüngung 14. Im übrigen ist die äußere Umfangsfläche des äußeren Mantels 13 über den größten Teil ihrer axialen Höhe als Grifffläche zum Verdrehen der Spannhülse 9 von Hand ausgebildet und dazu mit einer Kreuzrändelung versehen. Axial vor der Spannhülse 9 ist bei der Ausführungsform nach Fig. 1 noch eine gegenüber der Spannhülse 9 frei verdrehbare Anschlaghülse 15 vorgesehen, die am Futterkörper 1 axial unverschiebbar und drehbar gelagert ist, wozu im Ausführungsbeispiel einerseits ein an einer Ringschulter des Futterkörpers 1 abgestützter Zwischenring 16 und andererseits ein in eine Ringnut des Futterkörpers 1 eingelassener Sprengring 17 dient. Der äußere Mantel 13 erstreckt sich bis zum rückwärtigen Rand der Anschlaghülse 15, sofern er nicht selbst deren Schutzfunktion mit übernimmt und wie in den Fig. 6 und 7 bis an das dem Bohrwerkzeug zugewandte Ende des Futterkörpers 1 reicht, wodurch bei dem in Fig. 7 gezeigten Bohrfutter der äußere Mantel 13 über die gesamte axiale Erstreckung des Futterkörpers 1 eine schützende Hülle bildet.

## Patentansprüche

1. Bohrfutter mit einem an eine Bohrspindel anschließbaren Futterkörper (1), mit zwischen sich eine Aufnahme für das Bohrwerkzeug bildenden Spannbacken (5), die mit einer Verzahnung (6) in ein Spanngewinde (7) eines metallenen Spannrings (8) eingreifen, an dem ein metallener Zwischenring (18) drehfest angeschlossen ist, der eine Führung für eine der Verstellung der Spannbacken (5) dienende Spannhülse (9) bildet, dadurch gekennzeichnet, daß die Spannhülse (9) zweiteilig mit einem äußeren Mantel (13) und mit einem drehfest mit diesem verbundenen inneren Mantel (23) gebildet ist, und daß der äußere Mantel (13) aus einem harten Werkstoff besteht und zur Verstellung des Zwischenrings (18) vorgesehen ist.

2. Bohrfutter nach Anspruch 1, dadurch gekennzeichnet, daß der äußere Mantel (13) aus Metall, insbesondere Stahl besteht.

3. Bohrfutter nach Anspruch 1 oder 2, dadurch gekennzeichnet, daß der innere Mantel (23) aus einem fertigungstechnisch leicht formbaren Werkstoff besteht und zur Verstellung einer die Verdrehung des Spannrings (8) verhindernden bzw. freigebenden Sperreinrichtung (11) vorgesehen ist.

4. Bohrfutter nach Anspruch 3, dadurch gekennzeichnet, daß der innere Mantel (23) aus Kunststoff gefertigt ist.

5. Bohrfutter nach Anspruch 3 oder 4, dadurch gekennzeichnet, daß am inneren Mantel (23) eine Steuerkurve (20) für die Verstellung der Sperreinrichtung (11) angeordnet ist.

6. Bohrfutter nach einem der Ansprüche 1 bis 5, dadurch gekennzeichnet, daß sich der äußere Mantel (13) in axialer Richtung bis zu dem dem Bohrwerkzeug abgewandten Ende des Futterkörpers (1) erstreckt.

7. Bohrfutter nach einem der Ansprüche 1 bis 6, dadurch gekennzeichnet, daß der äußere Mantel (13) den inneren Mantel (23) an dem dem Bohrwerkzeug zugewandten Ende übergreift.

8. Bohrfutter nach einem der Ansprüche 1 bis 7, dadurch gekennzeichnet, daß der Zwischenring (18) Anschlagstücke (29) trägt, die in Aussparungen (30) des äußeren Mantels (13) eingreifen.

9. Bohrfutter nach Ansprüche 7 oder 8, dadurch gekennzeichnet, daß bei einer Spannhülse (9) mit einer konischen Hülsenverjüngung (14) am vorderen, dem Bohrwerkzeug zugewandten Hülsenende auch diese konische Hülsenverjüngung vom äußeren Mantel (13) umschlossen ist.

10. Bohrfutter nach einem der Ansprüche 1 bis 9, bei dem axial vor der Spannhülse (9) eine ihr gegenüber frei verdrehbare Anschlaghülse (15) vorgesehen ist, die am Futterkörper (1) axial unverschiebbar und drehbar gelagert ist, dadurch gekennzeichnet, daß sich der äußeren Mantel (13) bis zum rückwärtigen Rand der Anschlaghülse (15) erstreckt.

11. Bohrfutter nach einem der Ansprüche 1 bis 9, dadurch gekennzeichnet, daß der äußere Mantel (13) sich axial bis zu dem dem Bohrwerkzeug zugewandten Ende des Futterkörpers (1) erstreckt und dessen Stirnseite bedeckt.

12. Bohrfutter nach Anspruch 10 oder 11, dadurch gekennzeichnet, daß der äußere Mantel (13) das axial dem Bohrwerkzeug zugewandte Ende des inneren Mantels (23) mit einem Ringbund (24) umgreift, und daß in dem Ringbund (24) des äußeren Mantels (13) die Aussparungen (30) angeordnet sind.

13. Bohrfutter nach Anspruch 12, dadurch gekennzeichnet, daß der äußere Mantel (13) im Bereich der Aussparungen (30) eine Auskragung (25) aufweist, mit der er am Futterkörper (1) abgestützt ist.

14. Bohrfutter nach Anspruch 13, dadurch gekennzeichnet, daß die Auskragung (25) durch einen am Futterkörper (1) gehaltenen Sprengring (26) gegen axiale Verschiebung gesichert ist.

15. Bohrfutter nach einem der Ansprüche 1 bis 14, dadurch gekennzeichnet, daß die äußere Umfangsfläche des äußeren Mantels (13) über wenigstens einen Teil ihrer axialen Höhe als Grifffläche zum Verdrehen der Spannhülse (9) von Hand ausgebildet ist.

## Claims

1. A drilling chuck comprising a chuck body (1) which can be connected to a drilling spindle, clamping jaws (5) which form between them a receiving means for the drilling tool and which engage with a tooth arrangement (6) into a clamping screwthread (7) of a metal clamping ring (8) to which there is non-rotatably connected a metal intermediate ring (18) forming a guide for a clamping sleeve (9) which serves for displacement of the clamping jaws (5), characterised in that the clamping sleeve (9) is formed in two parts with an outer casing (13) and an inner casing (23) which is non-rotatably connected thereto, and that the outer casing (13) comprises a hard material and is provided for displacement of the intermediate ring (18).

2. A drilling chuck according to claim 1 characterised in that the outer casing (13) comprises metal, in particular steel.

3. A drilling chuck according to claim 1 or claim 2 characterised in that the inner casing (23) comprises a material which can be easily shaped in a manufacturing procedure and which is provided for displacement of a locking device (11) which prevents or permits rotary movement of the clamping ring (8).

4. A drilling chuck according to claim 3 characterised in that the inner casing (23) is made from plastic material.

5. A drilling chuck according to claim 3 or claim 4 characterised in that a control cam (20) for displacement of the locking device (11) is arranged at the inner casing (23).

6. A drilling chuck according to one of claims 1 to 5 characterised in that the outer casing (13) extends in the axial direction to the end of the chuck body (1), which is remote from the drilling tool.

7. A drilling chuck according to one of claims 1 to 6 characterised in that the outer casing (13) engages over the inner casing (23) at the end which is towards the drilling tool.

8. A drilling chuck according to one of claims 1 to 7 characterised in that the intermediate ring (18) carries abutment portions (29) which engage into openings (30) in the outer casing (13).

9. A drilling chuck according to claim 7 or claim 8 characterised in that, in the case of a clamping sleeve (9) with a conical sleeve taper (14) at the front end of the sleeve which is towards the drilling tool, that conical sleeve taper is also enclosed by the outer casing (13).

10. A drilling chuck according to one of claims 1 to 9 wherein disposed axially in front of the clamping sleeve (9) is an abutment sleeve (15) which is freely rotatable with respect thereto and which is mounted axially immovably and rotatably on the chuck body (1), characterised in that the outer casing (13) extends to the rearward edge of the abutment sleeve (15).

11. A drilling chuck according to one of claims 1 to 9 characterised in that the outer casing (13) extends axially to the end of the chuck body (1), which is towards the drilling tool, and covers the end thereof.

12. A drilling chuck according to claim 10 or claim 11 characterised in that the outer casing (13) embraces with an annular collar (24) the end of the inner casing (23), which is axially towards the drilling tool, and that the openings (30) are arranged in the annular collar (24) of the outer casing (13).

13. A drilling chuck according to claim 12 characterised in that in the region of the openings (30) the outer casing (13) has a projection portion (25) with which it is supported against the chuck body (1).

14. A drilling chuck according to claim 13 characterised in that the projection portion (25) is secured against axial displacement by a circlip (26) held to the chuck body (1).

15. A drilling chuck according to one of claims 1 to 14 characterised in that the outer peripheral surface of the outer casing (13) is formed over at least a part of its axial height as a gripping surface for turning the clamping sleeve (9) by hand.

## Revendications

1. Mandrin porte-foret, comprenant un corps de mandrin (1) qui peut être fixé à une broche de perçage, des mors de serrage (5) qui définissent entre eux un logement (4) pour l'outil de perçage et qui engrènent par une denture (6) avec un filetage de serrage (7) d'une bague de serrage (8) en métal, solidaire en rotation d'une bague intermédiaire (18) en métal, qui forme un moyen de guidage pour un manchon de serrage(9) servant à déplacer les mors (5), caractérisé en ce que le manchon de serrage (9) est réalisé en deux parties avec une enveloppe extérieure (13) et une enveloppe intérieure (23) solidaire en rotation de la première, et en ce que l'enveloppe extérieure (13) est réalisée en un matériau dur et est conçue pour déplacer la bague intermédiaire (18).

2. Mandrin de perçage selon la revendication 1, caractérisé en ce que, l'enveloppe extérieure (13) est en métal, en particulier en acier.

3. Mandrin de perçage selon la revendication 1 ou 2, caractérisé en ce que, l'enveloppe intérieure (23) est en un matériau aisément façonnable, et est agencée pour déplacer un dispositif de verrouillage (11) qui empêche ou libère la rotation de la bague de serrage (8).

4. Mandrin de perçage selon la revendication 3, caractérisé en ce que, l'enveloppe intérieure (23) est en matière plastique.

5. Mandrin de perçage selon la revendication 3 ou 4, caractérisé en ce que, l'enveloppe intérieure (23) comporte une came de commande (20) pour le déplacement du dispositif de verrouillage (11).

6. Mandrin de perçage selon une des revendications 1 à 5, caractérisé en ce que, l'enveloppe extérieure (13), dans la direction axiale, s'étend jusqu'à l'extrémité du corps de mandrin (1) éloignée de l'outil de perçage.

7. Mandrin de perçage selon une des revendications 1 à 6, caractérisé en ce que, l'enveloppe extérieure (13) recouvre l'enveloppe intérieure (23) à l'extrémité tournée vers l'outil de perçage.

8. Mandrin de perçage selon une des revendications 1 à 7, caractérisé en ce que, la bague intermédiaire (18) porte des pièces de butée (29) qui pénètrent dans des évidements (30) de l'enveloppe extérieure (13).

9. Mandrin de perçage selon la revendication 7 ou 8, caractérisé en ce que, dans le cas d'un manchon de serrage (9) comportant un resserrement (14) conique à son extrémité avant tournée vers l'outil de perçage, le resserrement conique est également entouré par l'enveloppe extérieure (13).

10. Mandrin de perçage selon une des revendications 1 à 9, dans lequel il est prévu, avant le manchon de serrage (9) dans la direction axiale, un manchon formant butée (15) qui est libre en rotation par rapport au manchon de serrage, est monté tournant mais fixe dans la direction axiale sur le corps de mandrin (1), caractérisé en ce que l'enveloppe extérieure (13) s'étend jusqu'au bord arrière du manchon de butée (15).

11. Mandrin de perçage selon une des revendications 1 à 9, caractérisé en ce que l'enveloppe extérieure (13) s'étend axialement jusqu'à l'extrémité du corps de mandrin (1) tournée vers l'outil de perçage et couvre la face frontale de celui-ci.

12. Mandrin de perçage selon une des revendications 10 ou 11, caractérisé en ce que l'enveloppe extérieure (13) entoure l'extrémité de l'enveloppe intérieure (23) tournée axialement vers l'outil de perçage par un collet annulaire (24) et en ce que les évidements (30) sont disposés dans le collet annulaire (24) de l'enveloppe extérieure (13).

13. Mandrin de perçage selon la revendication 12, caractérisé en ce que le manchon extérieur (13), dans la région des évidements (30) comporte une partie en saillie (25) par l'intermédiaire de laquelle il prend appui sur le corps de mandrin (1).

14. Mandrin de perçage selon la revendication 13, caractérisé en ce que la partie en saillie (25) est retenue dans la direction axiale par un anneau élastique (26) fixé au corps de mandrin (1).

15. Mandrin de perçage selon les revendications 1 à 14, caractérisé en ce que la surface périphérique extérieure de l'enveloppe extérieure (13), sur une partie au moins de sa hauteur axiale, est conformée en surface de préhension aux fins de tourner à la main le manchon de serrage (9).
